(19) Europäisches Patentamt / European Patent Office / Office européen des brevets

(11) **EP 4 722 307 A1**

(12) **EUROPEAN PATENT APPLICATION**
published in accordance with Art. 153(4) EPC

(43) Date of publication:
08.04.2026 Bulletin 2026/15

(21) Application number: 24815346.2

(22) Date of filing: 23.05.2024

(51) International Patent Classification (IPC):
*C09D 11/326* (2014.01)    *B41J 2/01* (2006.01)
*B41M 5/00* (2006.01)    *C09B 48/00* (2006.01)
*C09D 17/00* (2006.01)

(52) Cooperative Patent Classification (CPC):
B41J 2/01; B41M 5/00; C09B 48/00; C09D 11/326;
C09D 17/00

(86) International application number:
PCT/JP2024/018929

(87) International publication number:
WO 2024/247862 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.06.2023 JP 2023090800

(71) Applicant: DIC Corporation
Tokyo 174-8520 (JP)

(72) Inventors:
• SHIGEMORI Minoru
Kitaadachi-gun, Saitama 362-8577 (JP)
• MARU Hiroshi
Kitaadachi-gun, Saitama 362-8577 (JP)
• NIO Takahiro
Kitaadachi-gun, Saitama 362-8577 (JP)

(74) Representative: Kraus & Lederer PartGmbB
Thomas-Wimmer-Ring 15
80539 München (DE)

(54) **AQUEOUS PIGMENT DISPERSION, INKJET INK, AND METHOD FOR PRODUCING PRINTED MATTER**

(57) Provided is an aqueous pigment dispersion having water, a pigment, and a cross-linked polymer, wherein the cross-linked polymer is a reaction product of a dispersion resin having an anionic group and a cross-linking agent, the dispersion resin having an anionic group is water soluble and has an acid value of 181 to 220 mgKOH/g, the cross-linking agent is a water-soluble compound having two or more epoxy groups, and the cross-linked polymer has a cross-linking ratio of more than 80%. The aqueous pigment dispersion can be used to produce an inkjet ink that maintains excellent storage stability even under high temperatures or in an environment with widely varied temperatures, and has excellent printability.

EP 4 722 307 A1

**Description**

Technical Field

The present invention relates to an aqueous pigment dispersion, an inkjet ink, and a method for producing a printed material.

Background Art

Inkjet recording is a recording method in which ink droplets are ejected from extremely fine nozzles directly onto a recording material and attached thereto to form characters and images. This method is advantageous in that devices used produce less noise and are easy to handle. Moreover, with this method, color printing is easy. The inkjet recording method is therefore used not only in output machines in offices and homes but also in industrial applications.

Inks used in the above inkjet recording method are required to cause less viscosity increase or sedimentation of pigments and the like over time and have excellent storage stability in order to prevent ink ejection defects such as nozzle clogging, flight deflection, and droplets separation.

In addition, when the manufactured inks are transported, they may be stored at high or low temperatures, and it is necessary to make inks that do not cause sedimentation of pigments and the like even if the temperature changes.

As an example of aqueous pigment dispersions with excellent storage stability, a cross-linked polymer particle for inkjet recording and an aqueous dispersion using the same are known, which is formed by dispersing a pigment with a water-soluble polymer having an anionic group and a water-insoluble polymer having an anionic group and then cross-linking the polymers with a cross-linking agent (see, for example, PTL 1).

However, even when the dispersion is subjected to a cross-linking process as described above, storage stability depends greatly on the type of dispersion resin and cross-linking agent, as well as the conditions of the cross-linking reaction, and if the combination is not appropriate, storage stability may be insufficient under high temperatures or when high and low temperatures are repeatedly used.

In addition, there is a concern that as a result of enhanced cross-linking process to improve storage stability, even the dispersion resins that are not adsorbed on the pigment in the dispersion may cross-link to each other, resulting in a high molecular weight. The cross-linked polymer that is not adsorbed on the pigment easily becomes agglomerated, causing ink ejection defects such as nozzle clogging.

As described above, in a dispersion subjected to a cross-linking process, there is a trade-off between storage stability and ink ejectability, and there is a need to develop dispersions that achieve both.

Citation List

Patent Literature

PTL 1: Japanese Unexamined Patent Application Publication No. 2009-46595

Summary of Invention

Technical Problem

An object of the present invention is to provide an aqueous pigment dispersion that can be used to produce an inkjet ink that maintains excellent storage stability even under high temperatures or in an environment with widely varied temperatures, and has excellent ink ejectability as well as printability.

Solution to Problem

The present invention achieves the above object by an aqueous pigment dispersion having water, a pigment, and a cross-linked polymer, wherein

the cross-linked polymer is a reaction product of a dispersion resin having an anionic group and a cross-linking agent,
the dispersion resin having an anionic group is water soluble and has an acid value of 181 to 220 mgKOH/g,
the cross-linking agent is a water-soluble compound having two or more epoxy groups, and
the cross-linked polymer has a cross-linking ratio of more than 80%.

Advantageous Effects of Invention

The aqueous pigment dispersion of the present invention can provide an inkjet ink that maintains excellent storage stability and has excellent ink ejectability as well as printability, and a printed material.

Description of Embodiments

The aqueous pigment dispersion of the present invention has water, a pigment, and a cross-linked polymer, wherein the cross-linked polymer is a reaction product of a dispersion resin having an anionic group and a cross-linking agent, and the cross-linked polymer has a cross-linking ratio of more than 80%. The dispersion resin having an anionic group is water soluble and has an acid value of 181 to 220 mgKOH/g. Furthermore, the cross-linking agent is a water-soluble compound having two or more epoxy groups.

(Water)

As the water in the present invention, for example, pure water or ultrapure water, such as ion-exchanged water, ultra-filtrated water, reverse osmosis water, and distilled water can be used.

The water is preferably used in the range of 25% by mass to 90% by mass in the total amount of the aqueous pigment dispersion, more preferably used in the range of 35% by mass to 85% by mass, and even more preferably used in the range of 55% by mass to 75% by mass.

(Pigment)

As the pigment, for example, organic pigments and inorganic pigments commonly used in aqueous gravure inks, aqueous flexographic inks, aqueous offset inks, or aqueous inkjet inks can be used.

The pigment may include one or both of an organic pigment and an inorganic pigment. Either an acid-untreated pigment or an acid-treated pigment can be used as the pigment.

Examples of the inorganic pigment that can be used include iron oxide and carbon black produced by a method such as a contact method, a furnace method, or a thermal method.

Examples of the organic pigment that can be used include azo pigments (azo lakes, insoluble azo pigments, condensed azo pigments, chelate azo pigments, etc.), polycyclic pigments (e.g., phthalocyanine pigments, perylene pigments, perinone pigments, anthraquinone pigments, quinacridone pigments, dioxazine pigments, thioindigo pigments, isoindolinone pigments, quinophthalone pigments, etc.), lake pigments (e.g., basic dye-type chelates, acid dye-type chelates, etc.), nitro pigments, nitroso pigments, and aniline black.

Examples of the pigment that can be used in black ink (black pigment) include C.I. Pigment Black 1, 6, 7, 8, 10, 26, 27, and 28. Among these, C.I. Pigment Black 7 is preferably used. Specific examples of black pigments include No. 2200, No. 2300, No. 2350, No. 2600, No. 650B, No. 750B, No. 850, No. 900, No. 950, No. 960, No. 970, No. 980, No. 990, No. 995B, No. 1000, No. 3030B, No. 3050B, No. 3230B, No. 3400B, No. 25B, No. 30, No. 33, No. 40, No. 44, No. 45, No. 45L, No. 47, No. 52, MA7, MA8, MA77, MA100, MA230, MA600, MCF88, and the like from Mitsubishi Chemical Corporation; No. 5500, No. 4500, No. 4400, No. 8500, and the like from TOKAI CARBON CO., LTD.; Raven 760UP, Raven 780UP, Raven 860UP, Raven 900P, Raven 1000P, Raven 1060P, Raven 1080UP, Raven 1255, Raven 2000, Raven 2350 ULTRA, Raven 2500 ULTRA, Raven 2800 ULTRA, Raven 2900 ULTRA, Raven 3000 ULTRA, Raven 3500, Raven 5000 ULTRA II, Raven 5000 ULTRA 3, Raven UV ULTRA, Conductex SC ULTRA, Conductex K ULTRA, and the like from Birla Carbon; Regal 330R, Regal 400R, Regal 660R, Mogul L, Mogul 700, Monarch 700, Monarch 717, Monarch 800, Monarch 880, Monarch 900, Monarch 1000, Monarch 1100, Monarch 1300, Monarch 1400, BLACK PEARLS 800, BLACK PEARLS 880, BLACK PEARLS 1000, BLACK PEARLS 1300, BLACK PEARLS 2000, BLACK PEARLS 4040, BLACK PEARLS 4350, BLACK PEARLS 4560i, BLACK PEARLS 4750, VULCAN XC72, VULCAN XC72R, VULCAN 9A32, ELFTEX 570, ELFTEX P100, ELFTEX TP, and the like from Cabot Corporation; Color Black FW1, Color Black FW2, Color Black FW2V, Color Black FW18, Color Black FW171, Color Black FW182, Color Black FW200, Color Black FW285, Color Black S150, Color Black S160, Color Black S170, Printex 30, Printex 35, Printex 40, Printex 45, Printex U, Printex V, Printex 1400U, Printex 150T, Printex 55, Printex 70, Printex 75, Printex 80, Printex F80, Printex F85, Printex 90, Printex 95, Printex 300, Printex P beads, Printex L6, Special Black 6, Special Black 5, Special Black 4, Special Black 4A, Special Black 350, Special Black 550, NIPEX 35, NIPEX 75, NIPEX 90, NIPEX 150, NIPEX 160, NIPEX 160IQ, NIPEX 170, NIPEX 170IQ, NIPEX 180, NIPEX 180IQ, NIPEX 1601IQ, HIBLACK 50L, HIBLACK 600L, HIBLACK F890B, HIBLACK 930L, HIBLACK 970LB, Nerox 305, Nerox 500, Nerox 505, Nerox 600, Nerox 605, and the like from Orion Engineered Carbons.

Specific examples of the pigment that can be used in yellow ink (yellow pigment) include C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185.

Specific examples of the pigment that can be used in magenta ink (magenta pigment) include C.I. Pigment Red 5, 7, 12, 48 (Ca), 48 (Mn), 57 (Ca), 57:1, 112, 122, 123, 146, 149, 150, 168, 176, 184, 185, 202, 209, 254, 269, 282, and the like; and C.I. Pigment Violet 19. Specific examples of magenta pigments include Quindo Magenta 228-2120, Fastogen Super Magenta RGT, Fastogen Super Magenta RTS, Fastogen Super Magenta RY, Cinquasia Magenta D4550J, and Cinquasia Magenta D4500J from DIC Corporation; FUJI FAST CARMINE 520, FUJI FAST CARMINE 522-1D, Fuji Fast Carmine 580S, FUJI FAST CARMINE 590-4, FUJI FAST RED 9800, and FUJI FAST CARMINE 6005 from Fuji Pigment Co., Ltd.; and Ink Jet Magenta E5B 02 from Heubach GmbH.

Specific examples of the pigment that can be used in cyan ink (cyan pigment) include C.I. Pigment Blue 1, 2, 3, 15, 15: 3, 15: 4, 15: 6, 16, 22, 60, 63, and 66. Among these, C.I. Pigment Blue 15: 3 is preferably used. Specific examples of cyan pigments include FSJ-SD, TGR, TGR-J, TGR-SD, SBG-SD, KET BLUE 111, Heliogen Blue L 7101 F, and the like from DIC Corporation; and CYANINE BLUE 3023-A from SANYO COLOR WORKS, Ltd.

Specific examples of the pigment that can be used in white ink (white pigment) include sulfates and carbonates of alkaline earth metals, silicas such as fine silica powder and synthetic silicates, calcium silicate, alumina, alumina hydrate, titanium dioxide, zinc oxide, talc, and clay.

The pigment is preferably used in the range of 10% by mass to 25% by mass in the total amount of the aqueous pigment dispersion, and preferably used in the range of 12% by mass to 20% by mass to obtain an aqueous pigment dispersion that can suppress agglomeration and the like over time and has excellent storage stability.

In the present invention, it is preferable that the pigment is a quinacridone pigment in order to suitably achieve the effects of the present invention.

An example of the quinacridone pigment is a compound represented by the following general formula (1).

$$X_n\text{-}Q\text{-}Y_m \qquad (1)$$

(In the formula, Q represents a quinacridone residue or a quinacridone quinone residue, X and Y each represent a hydrogen atom, a methyl group, a chloro group, or a methoxy group, and n and m are each an integer of 1 to 4.)

Specific examples include dimethylquinacridone pigments such as 2,9-dimethylquinacridone, 3,10-dimethylquinacridone, and 4,11-dimethylquinacridone (C.I. Pigment Red 122, etc.), dichloroquinacridone pigments such as 2,9-dichloroquinacridone, 3,10-dichloroquinacridone, and 4,11-dichloroquinacridone (C.I. Pigment Red 202, C.I. Pigment Red 209, etc.), unsubstituted quinacridone pigments (C.I. Pigment Violet 19, etc.), dimethoxyquinacridone pigments such as 2,9-dimethoxyquinacridone, 3,10-dimethoxyquinacridone, and 4,11-dimethoxyquinacridone, quinacridone quinone pigments, and mixtures or solid solutions of at least two or more pigments selected from these pigments. The pigment may be a dry pigment in powder, granular or bulk form, or may be a wet cake or slurry. Among the above quinacridone pigments, C.I. Pigment Red 122 is preferred.

A solid solution of quinacridone pigments contains two pigments selected from unsubstituted quinacridone pigments, dimethylquinacridone pigments, and dichloroquinacridone pigments, and forms a mixed layer in which one quinacridone pigment is considered to have dissolved into the crystal phase of the other pigment. In other words, there are no single crystals of quinacridone pigment in the solid solution. Whether the pigment is a solid solution or a mixture of single crystals can be easily determined by powder X-ray diffraction.

In particular, a solid solution of unsubstituted quinacridone pigment and dimethylquinacridone pigment is preferred.

The weight ratio of [unsubstituted quinacridone pigment/dimethylquinacridone pigment], the weight ratio of [unsubstituted quinacridone pigment/dichloroquinacridone pigment], and the weight ratio of [dimethylquinacridone pigment/dichloroquinacridone pigment] in the solid solution of quinacridone pigments are preferably 5/95 to 95/5, and more preferably 10/90 to 90/10, in terms of ejection reliability, print density, color saturation, and the like. In particular, the weight ratio of [unsubstituted quinacridone pigment/dimethylquinacridone pigment] is preferably 5/95 to 40/60, and more preferably 10/90 to 30/70.

The form of the solid solution of quinacridone pigments may be a dry pigment in powder, granular, or bulk form, or may be a wet cake or slurry.

By using quinacridone pigments in particular in the present invention, the effects of the present invention can be suitably achieved. The reason for this is not clear, but the inventors of the present invention speculate as follows.

As can be seen from the quinacridone molecular skeleton, the upper and lower directions relative to the molecular plane show aromatic properties and high hydrophobicity, but the aromaticity of the side plane is extremely weak in some directions due to the presence of carbonyl and amino groups, and accordingly the hydrophobicity seems to be smaller than that of the upper and lower directions. Therefore, quinacridone pigments tend to be difficult to stabilize with hydrophobic functional groups which are adsorption groups of a dispersion resin. As a result, because the dispersion resin is likely to desorb, quinacridone pigments tend to have poor ink storage stability, especially when the ink is subjected to repeated temperature increases and decreases.

In the present invention, the quinacridone pigment is dispersed with the dispersion resin having an anionic group, and then the dispersion resin is cross-linked, which increases the molecular weight of the dispersion resin and suppresses the desorption of the dispersion resin from the quinacridone pigment. This presumably leads to good storage stability especially when the ink is subjected to repeated temperature increases and decreases.

It is preferable that the aqueous pigment dispersion of the present invention does not contain a pigment derivative. In general, pigments that are prone to poor storage stability, such as quinacridone pigments, are subjected to the addition of pigment derivatives to improve their storage stability. However, pigment derivatives that are not adsorbed on the pigment may agglomerate and reduce the ejectability from inkjet printers, and may also adversely affect storage stability when the ink is subjected to repeated temperature increases and decreases. The aqueous pigment dispersion of the present invention can improve the storage stability without using a pigment derivative although it is a dispersion of a pigment with relatively poor storage stability, such as quinacridone pigment, and can also suppress the adverse effects of pigment derivatives on the ink.

(Cross-Linked Polymer)

The aqueous pigment dispersion of the present invention has a cross-linked polymer.

The cross-linked polymer is a reaction product of a dispersion resin having an anionic group and a cross-linking agent.

It is preferable that the cross-linked polymer is formed, for example, by producing an aqueous pigment dispersion containing the pigment, the dispersion resin, water, and the like, and then mixing the aqueous pigment dispersion with the cross-linking agent to react the carboxyl group of the dispersion resin having an anionic group and the epoxy group of the cross-linking agent.

(Cross-Linking Ratio of Cross-Linked Polymer)

The cross-linked polymer contained in the aqueous pigment dispersion of the present invention has a cross-linking ratio of more than 80%. Here, the cross-linking ratio is a value that can be calculated by the following formula (2) from the amount and the number of moles of reactive groups of a cross-linking agent used, and the amount of a polymer used and the number of moles of reactive groups in the polymer that can react with the reactive groups of the cross-linking agent.

Cross-linking ratio (mol%) = 100 × [moles of reactive groups of the cross-linking agent]/[moles of carboxyl groups in the dispersion resin] Formula (2)    Formula (2)

In formula (2), the "moles of reactive groups of the cross-linking agent" is a value obtained by dividing the weight of the cross-linking agent used by the equivalent amount of reactive groups. That is, it is obtained by multiplying the number of moles of the cross-linking agent used by the number of reactive groups in one molecule of the cross-linking agent.

When the cross-linking ratio is more than 80%, the storage stability of the ink and the storage stability when the ink is subjected to repeated temperature increases and decreases can be improved. In order to maintain good ink ejectability, the cross-linking ratio is preferably more than 80% and less than 90%. If the cross-linking ratio is less than 90%, the anionic groups remaining in the dispersion resin without cross-linking reaction also contribute to the dispersion stability, resulting in good storage stability.

As the cross-linked polymer, one having an anionic group in the range of 0.2 to 2.5 mmol/g in the total amount of the cross-linked polymer is preferably used. The cross-linked polymer having an anionic group in the above range can be used to obtain an aqueous pigment dispersion having excellent storage stability and an ink including the same. It is more preferable to use the anionic group in the range of 0.3 to 2.0 mmol/g in the total amount of the cross-linked polymer to further improve the storage stability of the aqueous pigment dispersion and the ink.

When a reaction product of the dispersion resin and the cross-linking agent is used as the cross-linked polymer, the anionic group of the dispersion resin partially reacts with the epoxy group of the cross-linking agent and is consumed. Therefore, the amount of the anionic group in the total amount of the cross-linked polymer refers to the amount of the anionic group remaining in the reaction product of the dispersion resin and the cross-linking agent.

(Dispersion Resin Having Anionic Group)

The dispersion resin having an anionic group used in the present invention is water soluble and has an acid value of 181 to 220 mgKOH/g.

In the present invention, "dispersion resin is water soluble" means that 10 g or more of the neutralized dispersion resin neutralized with NaOH is dissolved in 100 g of water.

If the dispersion resin is water soluble, the pigment can be dispersed without the use of organic solvents, especially ester or ketone solvents, in a pigment dispersion process, thus eliminating the need for an organic solvent removal process, and preventing adverse effects of the remaining organic solvent that fails to be removed on the storage stability and the storage stability when the temperature is repeatedly increased and decreased.

The acid value of the dispersion resin having an anionic group used in the present invention is 181 to 220 mgKOH/g. The acid value is preferably 181 to 210 mgKOH/g, and more preferably 185 to 205 mgKOH/g. When the acid value is within the above range, it is possible to obtain an aqueous pigment dispersion with excellent storage stability by preventing agglomeration and sedimentation of pigments over time, and also to achieve excellent printability due to good ejectability. When a surfactant and a solvent are abundant in the ink composition, the ink tends to have poor storage stability when subjected to repeated temperature increases and decreases. However, with the acid value within the above range, even such an ink has good storage stability when the ink is subjected to repeated temperature increases and decreases.

The weight average molecular weight of the dispersion resin having an anionic group used in the present invention is preferably 10,000 to 50,000, more preferably 13,000 to 50,000, even more preferably 13,000 to 30,000, and particularly preferably 13,000 to 25,000.

When the weight average molecular weight is within the above range, the dispersion stability is good, and the storage stability and the storage stability when the temperature is repeatedly increased and decreased are also good. Furthermore, free dispersion resin is less likely to form agglomerates, reducing the possibility of the agglomerates adversely affecting inkjet ejectability.

The content of the dispersion resin having an anionic group in the aqueous pigment dispersion of the present invention is preferably in the range of 10% by mass to 34% by mass in the total amount of the pigment, and more preferably in the range of 15% by mass to 30% by mass. In other words, the dispersion resin having an anionic group/the pigment is preferably 0.10 to 0.40, more preferably 0.12 to 0.40, even more preferably 0.15 to 0.40, and particularly preferably 0.18 to 0.30.

Examples of the dispersion resin having an anionic group include acrylic resins such as acrylic acid-acrylic acid ester copolymers, styrene-acrylic resins such as styrene-acrylic acid copolymers, styrene-methacrylic acid copolymers, styrene-methacrylic acid-acrylic ester copolymers, styrene-$\alpha$-methylstyrene-acrylic acid copolymers, and styrene-$\alpha$-methylstyrene-acrylic acid-acrylic acid ester copolymers, resins such as styrene-maleic acid copolymers, styrene-maleic anhydride copolymers, and vinylnaphthalene-acrylic acid copolymers, and salts of the above resins. For example, as the dispersion resin, ACRYDIC series from DIC Corporation, HIROS-X series from Seiko PMC Corporation, and the compounds listed as the polymer (G) in WO2018/190139 can also be used as the dispersion resin. The dispersion resin having an anionic group may be referred to simply as dispersion resin.

Among those, it is preferable to use a styrene-acrylic acid copolymer and a styrene-methacrylic acid copolymer as the dispersion resin having an anionic group, because if so, the pigment can be stably dispersed in water.

It is preferable to use the dispersion resin having an anionic group in which the anionic group is partially or entirely neutralized by a neutralizer.

The neutralizer includes alkali metal hydroxides and amine compounds. It is preferable to use an alkali metal hydroxide as the neutralizer to further increase the dispersion stability immediately after production of the aqueous pigment dispersion of the present invention and the storage stability. The use of an alkali metal hydroxide also helps to maintain good ejectability.

Examples of the alkali metal hydroxide include lithium hydroxide, sodium hydroxide, potassium hydroxide, and cesium hydroxide. Sodium hydroxide and potassium hydroxide are preferred, and potassium hydroxide is more preferred.

It is preferable to use the neutralizer such that a neutralization ratio calculated by the formula below is within 100% to prevent sedimentation, agglomeration, and the like of the pigment over time and to obtain an aqueous pigment dispersion with excellent storage stability. The neutralization ratio refers to a value calculated based on the formula [100 × (molar equivalent of the hydroxyl group of the alkali metal hydroxide/molar equivalent of the anionic group of the dispersion resin)].

(Cross-Linking Agent)

The cross-linking agent used in the present invention is a water-soluble compound having two or more epoxy groups.

Examples of the cross-linking agent include polyglycidyl ethers such as ethylene glycol diglycidyl ether, polyethylene glycol diglycidyl ether, polypropylene glycol diglycidyl ether, glycerol triglycidyl ether, glycerol polyglycidyl ether, polyglycerol polyglycidyl ether, trimethylolpropane polyglycidyl ether, sorbitol polyglycidyl ether, pentaerythritol polyglycidyl ether, resorcinol diglycidyl ether, and neopentyl glycol diglycidyl ether. These cross-linking agents may be used alone or two or more types thereof may be used in combination.

Among others, it is preferable to use the cross-linking agent having an epoxy group and an oxyethylene structure to further improve the storage stability of the aqueous pigment dispersion. Specifically, it is preferable to use ethylene glycol diglycidyl ether, polyethylene glycol diglycidyl ether, glycerol polyglycidyl ether, and trimethylolpropane polyglycidyl ether as the cross-linking agent. It is more preferable to use ethylene glycol diglycidyl ether.

As the cross-linking agent, a compound having two or more epoxy groups can be used. It is preferable to use one having 2 to 4 epoxy groups as the cross-linking agent to further improve the storage stability of the aqueous pigment dispersion, and it is more preferable to use one having 2 epoxy groups because it is easier to achieve the storage stability of the ink and the storage stability when the ink is subjected to repeated temperature increases and decreases, as well as the ink ejectability.

It is preferable to use a compound having epoxy groups at both ends as the cross-linking agent, and it is more preferable to use a compound having epoxy groups only at both ends. By using a compound having epoxy groups at both ends as the cross-linking agent, the dispersion resin can be suitably cross-linked, and even if the dispersion resin that has not contributed to pigment dispersion is cross-linked, it is easy to maintain good ejectability. Using a compound having epoxy groups only at both ends is more preferred because cross-linking density is suitably controlled and it is easier to achieve the ink storage stability and the storage stability when the ink is subjected to repeated temperature increases and decreases, as well as the ink ejectability.

The amount of epoxy groups in the cross-linking agent is expressed in terms of epoxy equivalents. The epoxy equivalent is a value obtained by dividing the molecular weight of the epoxy compound by the number of epoxy groups, and the smaller this value is, the shorter the distance between cross-linking points.

The epoxy equivalent of the cross-linking agent is preferably 100 or more and 400 or less, more preferably 100 or more and 350 or less, and even more preferably 100 or more and 300 or less. If the epoxy equivalent is 100 or less, the distance between cross-linking points is too short to cross-link the dispersion resins to each other. On the other hand, if the epoxy equivalent is too large, the dispersion resins further away from each other are cross-linked to form a bridging structure, causing the ink to thicken.

The cross-linking agent is water soluble. Here, "the cross-linking agent is a water-soluble compound" means, in other words, that the water solubility of the cross-linking agent is 50% or more. The water solubility is preferably 60% or more, more preferably 70% or more, even more preferably 80% or more, and particularly preferably 90% or more. The higher the water solubility of the cross-linking agent, the less likely it is that the particle size of the pigment will increase when the dispersion resin is cross-linked, thereby reducing pigment agglomeration.

The water solubility (%) is the dissolution rate (% by mass) when 10 parts by mass of the epoxy compound is dissolved in 90 parts by mass of water at 25°C at room temperature. Specifically, the following procedure can be used for the measurement.

To a glass tube (25 mm in diameter × 250 mm in height), 90 parts of ion-exchanged water and 10 parts of cross-linking agent are added at 25°C at room temperature, and the glass tube is allowed to stand in a thermostatic bath at a water temperature of 25°C for 1 hour. The glass tube is then shaken vigorously for 1 minute, and then allowed to stand in the thermostatic bath again for 10 minutes. The undissolved substance is then weighed and the water solubility (% by mass) is calculated.

The cross-linking agent is preferably used in the range of 4.0 mmol/g or less in the total amount of the dispersion resin to obtain an aqueous pigment dispersion with even more excellent storage stability, more preferably used in the range of 3.8 mmol/g or less, and more preferably used in the range of 2.3 mmol/g or more and 3.6 mmol/g or less.

The aqueous pigment dispersion of the present invention may contain a water-soluble solvent, a preservative, a viscosity adjuster, a pH adjuster, a chelating agent, a plasticizer, an antioxidant, a UV absorber, and the like, if necessary. The chelating agent can reduce the amount of pigment-derived metal ions included in the aqueous pigment dispersion.

A method for producing the aqueous pigment dispersion of the present invention will now be described.

The present invention also provides a method for producing an aqueous pigment dispersion having water, a pigment, and a cross-linked polymer, wherein the cross-linked polymer is formed by cross-linking a dispersion resin having an anionic group by a cross-linking agent, the dispersion resin having an anionic group is water soluble and has an acid value of 181 to 220 mgKOH/g, the cross-linking agent is a water-soluble compound having two or more epoxy groups, and the cross-linked polymer has a cross-linking ratio of more than 80%.

Specifically, an example of the method for producing an aqueous pigment dispersion includes: step 1 of mixing water, a pigment, and a dispersion resin having an anionic group to produce a dispersion in which the pigment is dispersed in the water; and step 2 of allowing an anionic group such as carboxyl group of the dispersion resin in the dispersion to react with a functional group such as epoxy group of the cross-linking agent to form a cross-linked polymer, wherein the dispersion resin having an anionic group is water soluble and has an acid value of 181 to 220 mgKOH/g, the cross-linking agent is a water-soluble compound having two or more epoxy groups, and the cross-linked polymer has a cross-linking ratio of more than 80%.

Step 1 is a step of processing a mixture of the pigment, the dispersion resin, and water, for example, using a disperser.

As the disperser, for example, a mixing disperser with high-speed stirrer blades such as intensive mixer (Nippon Eirich Co., Ltd.), Butterfly Mixer (INOUE MFG., INC.), a planetary mixer (INOUE MFG., INC.), or a media-type wet disperser such as SC Mill (NIPPON COKE & ENGINEERING CO., LTD.) and Nano Mill (ASADA IRON WORKS CO., LTD.), or a no-media-type wet disperser such as STAR BURST (SUGINO MACHINE LIMITED) and ultrasonic processor (Hielscher Ultrasonics GmbH) can be used.

Among those, it is preferable to use the mixing disperser with high-speed stirrer blades as the disperser to prevent deterioration of inkjet ejection of the ink due to beads used in the media-type wet disperser. Furthermore, compared to the wet disperser, the mixing disperser with high-speed stirrer blades allows the temperature of the content in the disperser to be increased to near 100°C and consequently, can increase the adsorbability of the dispersion resin on the pigment. If the amount of dispersion resin not adsorbed on the pigment is small, cross-linked polymer agglomerates are less likely to be generated during a cross-linking process, and good ejectability from printers is maintained.

On the other hand, when the media-type wet disperser or the no-media-type wet disperser is used, step 1 may include: step 1-1 of mixing the pigment, the dispersion resin, and water and performing preliminary dispersion using a stirrer or the like to produce a mixture in which the pigment and the like contains the water; and step 1-2 of processing the mixture obtained in step 1-1 using the above media-type wet disperser or no-media-type wet disperser. With this step, the dispersibility of the pigment and the like contained in the aqueous pigment dispersion can be checked during the step.

Neutralization of the dispersion resin is preferably performed during step 1 or after completion of step 1. Specifically, the neutralization can be performed by supplying and blending the above neutralizer to the mixture during step 1 or to the dispersion obtained after the completion of step 1.

The dispersion obtained in step 1 can be subjected to centrifugal separation, pH adjustment, and removal of metal ions as necessary before performing step 2.

Step 2 will now be described.

Step 2 is a step of allowing an anionic group such as carboxyl group of the dispersion resin to react with a functional group such as epoxy group of the cross-linking agent to form the dispersion resin having an anionic group coating or adsorbed on the surface of the pigment. The reaction is preferably performed in the range of 60 to 70°C to obtain an aqueous pigment dispersion with even more excellent storage stability.

Although it is preferable that the cross-linking agent is supplied to the dispersion obtained after completion of step 1, the cross-linking agent may be supplied to the mixture of the pigment, the dispersion resin, and the water during step 1.

It is preferable to subject the aqueous pigment dispersion obtained through steps 1 and 2 to centrifugal separation or filtering, if necessary, to remove coarse particles and reduce the amount of sediment contained in the dispersion obtained in step 1, the aqueous pigment dispersion, or the ink.

The aqueous pigment dispersion obtained by the method described above can be used to produce an ink such as an inkjet ink, as described later. However, the aqueous pigment dispersion obtained by the method described above tends to have a slightly higher pH, so if the pH deviates from the pH expected for inks, it is preferable to adjust the pH of the aqueous pigment dispersion to a lower value in advance to increase the degree of freedom in ink design. An example of the method of adjusting the pH of the aqueous pigment dispersion is to treat the aqueous pigment dispersion with an ion exchange resin. Specifically, for example, the method includes blending a weakly acidic cation-exchange resin, such as Amberlite IRC76 from ORGANO CORPORATION, with the aqueous pigment dispersion and then removing the cation-exchange resin.

(Inkjet Ink)

The aqueous pigment dispersion of the present invention obtained by the above method can be used, for example, to produce inks. Among others, the aqueous pigment dispersion can be used to produce an inkjet ink.

The inkjet ink can be produced, for example, by supplying and blending an aqueous medium, a binder, a surfactant, and the like, if necessary, to the aqueous pigment dispersion. In blending the aqueous pigment dispersion with an aqueous medium, a binder, a surfactant, and the like, if necessary, for example, a disperser or a mixer such as a beads mill, an ultrasonic homogenizer, a high-pressure homogenizer, a paint shaker, a ball mill, a roll mill, a sand mill, a sand grinder, Dyno-Mill, DISPERMAT, SC mill, or Nano-Mizer can be used.

The inkjet ink may contain other additives such as a binder, a surfactant, a wax, a wetting agent (drying retarder), a penetrating agent, a preservative, a viscosity adjuster, a pH adjuster, a chelating agent, a plasticizer, an antioxidant, and a UV absorber, if necessary.

For example, a poly(meth)acrylic resin, a polyurethane resin, a polyester resin, or an acid-modified polypropylene resin can be used as the binder. As the acid-modified polypropylene resin, a resin obtained by modifying polypropylene with one or two or more acid compounds can be used, and a resin having a polypropylene-derived backbone (polypropylene backbone) and an acid compound-derived functional group can be used. An inkjet ink containing the acid-modified polypropylene resin can suppress occurrence of print defects such as mottling and streaks in one-pass printing on a printed material even when printed on a recording medium that does not absorb or less absorbs a solvent in the ink.

A commercially available product can be used as the acid-modified polypropylene resin. Examples of preferred commercially available products include AUROREN (registered trademark) AE-301 and AE-502 from Nippon Paper Industries Co., Ltd. As the oxidized polyethylene wax, for example, polyethylene wax subjected to oxidation can be used. Specifically, the one having a polyethylene-derived backbone (polyethylene backbone) can be used.

Examples of the surfactant that can be used include anionic surfactants, nonionic surfactants, cationic surfactants, and amphoteric surfactants.

As the surfactant, it is preferable to use one or more selected from the group consisting of anionic surfactants and nonionic surfactants in terms of easily suppressing the occurrence of streaky print defects.

Examples of the anionic surfactants include alkyl benzene sulfonates, alkyl phenyl sulfonates, alkyl naphthalene sulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates. Specific examples of these include dodecyl benzene sulfonates, isopropylnaphthalene sulfonates, monobutylphenylphenol monosulfonates, monobutylbiphenyl sulfonates, and dibutylphenylphenol disulfonates.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerol fatty acid esters, polyoxyethylene glycerol fatty acid esters, polyglycerol fatty acid esters, sucrose fatty acid esters, polyoxyethylene alkylamines, polyoxyethylene fatty acid amides, fatty acid alkylolamides, alkyl alkanolamides, acetylene glycols, oxyethylene adducts of acetylene glycols, and polyethylene glycol-polypropylene glycol block copolymers. Among these, one or more selected from the group consisting of polyoxyethylene nonylphenyl ethers, polyoxyethylene octylphenyl ethers, polyoxyethylene dodecylphenyl ethers, polyoxyethylene alkyl ethers, polyoxyethylene fatty acid esters, sorbitan fatty acid esters, polyoxyethylene sorbitan fatty acid esters, fatty acid alkylolamides, acetylene glycols, oxyethylene adducts of acetylene glycols, and polyethylene glycol-polypropylene glycol block copolymers are preferred.

As the nonionic surfactant, the inkjet ink preferably contains an acetylene-based surfactant in terms of easily suppressing the occurrence of streaky print defects. The acetylene-based surfactant is a surfactant having an acetylene structure in the molecule. The acetylene-based surfactant preferably includes one or more selected from the group consisting of acetylene glycols and oxyethylene adducts of acetylene glycols in terms of easily suppressing the occurrence of streaky print defects.

The amount of the acetylene-based surfactant is preferably 80 to 100% by mass, more preferably 85 to 99.9% by mass, and even more preferably 90 to 99.5% by mass of the total amount of the surfactant, in terms of easily suppressing the occurrence of streaky print defects.

Examples of other surfactants that can be used include silicone surfactants such as polysiloxane oxyethylene adducts; fluorosurfactants such as perfluoroalkyl carboxylates, perfluoroalkyl sulfonates, and oxyethylene perfluoroalkyl ethers; and biosurfactants such as spiculisporic acid, rhamnolipid, and lysolecithin.

The amount of the surfactant is preferably 0.1 to 2% by mass, more preferably 0.5 to 2% by mass, and even more preferably 0.8 to 1.6% by mass in the total amount of the inkjet ink.

The ejected droplets of the inkjet ink containing a surfactant in such an amount have high wettability on a surface of a material to be printed and sufficiently spread over the material to be printed, thereby easily achieving the effect of preventing the occurrence of streaky print defects. If the amount of the surfactant in the ink is within this range, the surfactant is less likely to be concentrated when the ink is subjected to repeated temperature increases and decreases, thus maintaining good storage stability.

The use of a surfactant facilitates prevention of the occurrence of streaky print defects, for example, because the inkjet ink ejected from the ejection holes of inkjet heads spreads on a surface well after landing on a material to be printed. Furthermore, the use of a surfactant can reduce the surface tension of the inkjet ink, for example, thereby easily improving the leveling properties of the inkjet ink.

For example, oxidized polyethylene wax can be used as the wax.

An inkjet ink containing the oxidized polyethylene wax can produce a printed material with excellent image fastness.

As the oxidized polyethylene wax, it is preferable to use an oxidized polyethylene wax in a dissolved or dispersed state in a solvent to obtain a printed material with excellent image fastness.

A commercially available product can be used as the oxidized polyethylene wax. Examples of preferred commercially available products include AQUACER 515 and AQUACER 1547 available from BYK-Chemie GmbH.

The wetting agent can be used for preventing the inkjet ink from drying at the ejection nozzles of inkjet heads. It is preferable to use a wetting agent that is miscible with water and can prevent clogging of ejection holes of inkjet heads. Examples include ethylene glycol, diethylene glycol, triethylene glycol, polyethylene glycol with a molecular weight of 2000 or less, propylene glycol, dipropylene glycol, tripropylene glycol, isopropylene glycol, isobutylene glycol, 1,4-butanediol, 1,3-butanediol, 1,5-pentanediol, 1,6-hexanediol, meso-erythritol, pentaerythritol, and glycerol.

A solid wetting agent can also be used as the wetting agent. Examples of such a wetting agent include urea and urea derivatives. Examples of the urea derivatives include ethylene urea, propylene urea, diethyl urea, thiourea, N,N-dimethyl urea, hydroxyethyl urea, hydroxybutyl urea, ethylenethiourea, and diethylthiourea. These can be used singly or in combination of two or more. Preferably, at least one selected from the group consisting of urea, ethylene urea, and 2-hydroxyethyl urea is used in terms of easily producing a printed material with excellent setting properties.

The amount of the wetting agent is 3 to 50% by mass in the total amount of the inkjet ink to achieve both of ease of drying on a recording medium and prevention of sticking of the inkjet ink inside the inkjet heads.

Examples of the penetrating agent include lower alcohols such as ethanol and isopropyl alcohol; and glycol monoethers such as ethylene glycol monomethyl ether, ethylene glycol monoethyl ether, ethylene glycol monopropyl ether, ethylene glycol monobutyl ether, diethylene glycol monomethyl butyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, tripropylene glycol monopropyl ether, and tripropylene glycol monobutyl ether.

When the ink is subjected to repeated temperature increases and decreases, the above wetting agent and penetrating agent may accelerate the concentration of the surfactant at low temperatures, and the concentrated components may adversely affect pigment dispersion at high temperatures. However, the use of the aqueous pigment dispersion of the present invention can reduce this adverse effect and provide good storage stability even when the ink is subjected to repeated temperature increases and decreases.

In the inkjet ink obtained by the above method, the pigment is preferably used in the range of 1% by mass to 15% by mass in the total amount of the inkjet printing ink, and preferably used in the range of 2% by mass to 10% by mass to achieve high printing density of a printed material, produce less streaks on a printed material, and obtain a printed material with excellent image fastness and excellent dispersion stability.

The pH of the inkjet ink is preferably 7.0 or higher, more preferably 7.5 or higher, and even more preferably 8.0 or higher in order to improve storage stability and ejection stability of the ink, and to improve wettability, printing density, and abrasion resistance in printing on a less-ink-absorbent or non-ink-absorbent recording medium. The upper limit of pH of the aqueous ink composition is preferably 11.0 or lower, more preferably 10.5 or lower, and even more preferably 10.0 or lower, in order to suppress deterioration of members of an ink-applying or ejecting device (e.g., ink ejection holes, ink channels, etc.) and to reduce the effect of ink adhering to the skin. In these respects, the pH of the inkjet ink is preferably 7.0 to 11.0. The above pH is the pH at 25°C.

The viscosity of the inkjet ink is preferably 2 mPa·s or higher and lower than 10 mPa·s at 32°C. When the inkjet ink having a viscosity within this range is used in the inkjet recording method, the displacement of ink droplets landing on a recording medium due to flight deflection is alleviated in appearance, and the occurrence of streaks on a printed material tends to be prevented effectively. The inkjet ink having a viscosity in this range tends to be excellent in storage stability and ejection stability in the inkjet recording method. The viscosity of the inkjet ink at 32°C is preferably 3 mPa·s or higher and more preferably 4 mPa·s or higher. The viscosity of the aqueous ink composition at 32°C is preferably 8 mPa·s or lower and more preferably 7 mPa·s or lower. The viscosity is the value measured, for example, using a cone-and-plate rotational viscometer equivalent to an E-type viscometer, under the following conditions.

Measuring device: TVE-25 viscometer (TVE-25 L available from Toki Sangyo Co., Ltd.)
Standard liquid for calibration: JS20
Measuring temperature: 32°C
Rotation speed: 10 to 100 rpm
Injection volume: 1200 $\mu$L

The surface tension of the inkjet ink is, for example, 20 to 40 mN/m at 25°C. When the aqueous ink composition having a surface tension within this range is used in the inkjet recording method, the wettability of the ejected droplets with the surface of a recording medium tends to be high, and the droplets tend to sufficiently spread after landing. The surface tension of the inkjet ink at 25°C is preferably 25 mN/m or higher and more preferably 27 mN/m or higher. The surface tension of the aqueous ink composition at 25°C is preferably 35 mN/m or lower and more preferably 32 mN/m or lower.

The inkjet ink containing the aqueous pigment dispersion of the present invention has a high cross-linking ratio, so that the dispersion resin is more firmly adsorbed to the pigment surface to provide good storage stability. Here, "good storage stability" means that the rate of change in volume average particle size is less than 10% in 2 weeks, less than 15% in 4 weeks, and less than 20% in 8 weeks of testing, as measured by the following method. The storage by the following method is an accelerated test, and the result obtained after 8 weeks of storage at 60°C is equivalent to the result of storage at room temperature (25°C) for approximately 2 years, allowing the prediction of degradation associated with long-term storage.

[Storage Stability Evaluation Method]

The volume average particle size D0 of the inkjet ink immediately after production was measured by the following particle size measurement method.

Next, 30 mL of the inkjet ink was filled into a polypropylene bottle with a volume of 30 mL and stored in a thermostatic chamber at 60°C. After a certain period of time from the start of storage, the volume average particle size D1 of the inkjet ink was measured by the following particle size measurement method.

Based on the volume average particle sizes D0 and D1 and the following formula, the rate of change in particle size of the inkjet ink after a certain period of time from the start of storage was calculated, and the storage stability of the inkjet ink was evaluated based on the rate of change.

```
Rate of change in particle size = [(D1-D0)/(D0)] × 100
```

The particle size of the inkjet ink was measured under the following conditions.

Measuring device: Particle size analyzer NANOTRAC WAVE 2 (MicrotracBEL Corp.)
Measuring temperature: 25°C
Number of times of measurement: 1
Measurement time: 180 seconds
Particle transmissivity: transmit
Particle refractive index: 1.51
Particle shape: Non-spherical
Density: 1.00
Solvent refractive index: 1.333
Filter: Stand: Norm

The inkjet ink containing the aqueous pigment dispersion of the present invention can remain stable even when the storage temperature is low or high due to shipping and the like. Stability under such storage conditions can be evaluated by repeatedly increasing and decreasing the storage temperature.

When the storage temperature is high, the adsorption between the pigment and the dispersion resin is more likely to come off and the pigment is more likely to agglomerate because molecular motion becomes more active. On the other hand, when the storage temperature is low (e.g., -40°C), some of the components in the inkjet ink (especially surfactant) precipitate or are concentrated, and when the ink temperature subsequently increases, the dispersion system may interact with the highly concentrated ink components and easily cause pigment agglomeration. Because of this particle size increase mechanism, the above storage stability at a constant temperature does not necessarily correlate with the storage stability when the temperature is repeatedly increased and decreased. The inkjet ink containing the aqueous pigment dispersion of the present invention can maintain good storage stability when the temperature is repeatedly increased and decreased. Here, "good storage stability when the temperature is repeatedly increased and decreased" means that the rate of change in volume average particle size is less than 10%, as measured by the following method.

(Heating and Cooling Cycle Test Evaluation Method)

The volume average particle size D0 of the inkjet ink immediately after production was measured by the following particle size measurement method.
Next, 30 mL of inkjet ink was filled into a polypropylene plastic bottle with a volume of 30 mL and allowed to stand in a thermostatic chamber under room temperature conditions. The chamber temperature was cooled to -40°C, held at -40°C for 4 hours, then increased to 70°C and held at 70°C for 4 hours. This temperature cycle was repeated four times, and the volume average particle size D2 of the inkjet ink after completion of the cycles was measured, and the rate of change from D0 was calculated.

```
Rate of change in particle size = [(D2-D0)/(D0)] × 100
```

A printed material obtained using the inkjet ink of the present invention has, for example, a recording medium and a coating of the inkjet ink printed on a surface of the recording medium. The ink coating formed on a surface of the recording medium is, for example, a dried product of the inkjet ink and contains solid contents in the inkjet ink (for example, the pigment, the pigment dispersant (B), and the like).

The recording medium is, for example, plain paper, inkjet dedicated paper, glossy paper, or a less-ink-absorbent or non-ink-absorbent recording medium. This printed material has sufficient image fastness even when the recording medium is the less-ink-absorbent or non-ink-absorbent medium described above.

The printed material is produced, for example, by performing printing with the inkjet ink on a surface of a recording medium by the inkjet recording method. Specifically, the printed material can be produced by ejecting the inkjet ink and performing printing on a recording medium by the inkjet recording method in which the distance from a surface (x) having ink ejection holes of an inkjet head to a position (y) where a normal to the surface (x) intersects the recording medium is 1 mm or more.

Examples

The invention will be described in more detail below with examples, but the invention is not limited to these examples.

(Dispersion Resin A)

A dispersion resin A, which is a radical polymer, is a powder (1 mm or less in diameter) produced by a solution polymerization method, with a monomer composition ratio of styrene/acrylic acid/methacrylic acid/butyl acrylate = 72.00/12.13/15.77/0.10 (by mass), a weight average molecular weight of 16000, an acid value of 185 mgKOH/g, and a glass transition temperature of 139°C. The dispersion resin A was found to be water soluble as a result of the following water solubility test.

(Dispersion Resin B)

A dispersion resin B, which is a radical polymer, is a powder (1 mm or less in diameter) produced by a solution polymerization method, with a monomer composition ratio of styrene/acrylic acid/methacrylic acid/butyl acrylate = 69.06/13.41/17.43/0.10 (by mass), a weight average molecular weight of 14000, an acid value of 202 mgKOH/g, and a glass transition temperature of 139°C. The dispersion resin B was found to be water soluble as a result of the following water solubility test.

(Dispersion Resin C)

A dispersion resin C, which is a radical polymer, is a powder (1 mm or less in diameter) produced by a solution polymerization method, with a monomer composition ratio of styrene/acrylic acid/methacrylic acid/butyl acrylate = 74.00/11.26/14.64/0.10 (by mass), a weight average molecular weight of 11000, an acid value of 173 mgKOH/g, and a glass transition temperature of 115°C. The dispersion resin C was found to be water soluble as a result of the following water solubility test.

The weight average molecular weight in the present invention is a value measured by a GPC (gel permeation chromatography) method and converted to a molecular weight of polystyrene used as the standard material. The measurements were performed using the following equipment and conditions.

Pump: LC-9A
System controller: SLC-6B
Auto injector: S1L-6B
Detector: RID-6A

The above are available from Shimadzu Corporation.

Data processing software: Sic480II Data Station (SYSTEM INSTRUMENTS Co., Ltd.)
Columns: GL-R400 (guard column) + GL-R440 + GL-R450 + GL-R400M (Hitachi Chemical Co., Ltd.)
Eluent: Tetrahydrofuran (THF)
Elution flow rate: 2 ml/min
Column temperature: 35°C

The water solubility of the dispersion resin was determined by the following procedure.

(1) 10 g of the dispersion resin was taken in a beaker.

(2) NaOH solution was added to (1) to achieve 100% neutralization, depending on the acid value of the dispersion resin.

(3) Water was added to (2) so that the amount of water and NaOH solution added was 100 g, and the mixture was stirred well while heated to 50 to 60°C if necessary.

(4) The aqueous solution was allowed to stand at 25°C and visually checked for sediments after 24 hours or longer.

Sediment present: water insoluble

No sediment: water soluble

(Production Example 1)

The dispersion resin A and FASTOGEN SUPER MAGENTA RY (from DIC Corporation) as magenta pigment were charged in a planetary mixer (product name: Chemical Mixer ACM04LVTJ-B from AIKOSHA MFG., CO., LTD.) with a jacket heated to 80°C, according to the amounts in Table 1, and stirred at a rotation speed of 80 rpm and a revolution speed of 25 rpm. After 10 minutes, triethylene glycol was added as a solvent and 34% by mass of potassium hydroxide solution as a neutralizer, and the mixture was stirred again. Kneading was continued until 60 minutes had passed after the current value of the planetary mixer showed its maximum current value to obtain a kneaded product.

The resulting kneaded product was gradually mixed with ion-exchanged water and diluted. Finally, triethylene glycol was added as a diluent to obtain an aqueous pigment dispersion 1 with a pigment concentration of 15.4% by mass.

(Production Examples 2 and 3)

Aqueous pigment dispersions 2 and 3 were obtained in the same manner as in Production Example 1, except that the raw materials used and their input amounts were changed as listed in Table 1.

[Table 1]

|  |  | Production Example 1 | Production Example 2 | Production Example 3 |
|---|---|---|---|---|
|  |  | Aqueous pigment dispersion 1 | Aqueous pigment dispersion 2 | Aqueous pigment dispersion 3 |
| Pigment | FASTOGEN SUPER MAGENTA RY | 50 | 50 | 50 |
| Dispersion resin | Dispersion resin A | 10 |  |  |
|  | Dispersion resin B |  | 10 |  |
|  | Dispersion resin C |  |  | 10 |
| Others | Triethylene glycol | 31.25 | 31.25 | 31.25 |
|  | 34% by mass potassium hydroxide solution | 5.44 | 5.94 | 5.09 |
|  | Ion-exchanged water | 219.24 | 218.74 | 219.59 |
|  | Triethylene glycol | 8.75 | 8.75 | 8.75 |

(Example 1)

In a polyethylene container with a lid, the aqueous pigment dispersion 1 obtained in Production Example 1, a cross-linking agent, and ion-exchanged water were charged in parts by mass as listed in Table 2, and stirred at 70°C for 5 hours. After stirring, the mixture was cooled to obtain a cross-linked dispersion 1 with a pigment concentration of 15% by mass. The cross-linking ratio of the cross-linked polymer in this cross-linked dispersion was 82%.

(Examples 2 to 4 and Comparative Examples 1 to 6)

Cross-linked dispersions 2 to 10 were obtained in the same manner as in Example 1, except that the raw materials used and their input amounts were changed as listed in Table 2.

The cross-linking ratios of the cross-linked polymers in the cross-linked dispersions 1 to 10 in Examples 1 to 4 and Comparative Examples 1 to 6 were calculated as follows.

Cross-linking ratio (mol%) = 100 × [moles of reactive groups of the cross-linking agent]/[moles of carboxyl groups in the dispersion resin] Formula (2)    Formula (2)

In formula (2), the "moles of reactive groups of the cross-linking agent" is a value obtained by dividing the weight of the cross-linking agent used by the equivalent amount of reactive groups. That is, it is obtained by multiplying the number of moles of the cross-linking agent used by the number of reactive groups in one molecule of the cross-linking agent.

[Table 2]

| | | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|
| | | Cross-linked dispersion 1 | Cross-linked dispersion 2 | Cross-linked dispersion 3 | Cross-linked dispersion 4 | Cross-linked dispersion 5 | Cross-linked dispersion 6 | Cross-linked dispersion 7 | Cross-linked dispersion 8 | Cross-linked dispersion 9 | Cross-linked dispersion 10 |
| Dispersion | Aqueous pigment dispersion 1 | 194.81 | 194.81 | 194.81 | | | | 194.81 | 194.81 | 194.81 | 194.81 |
| | Aqueous pigment dispersion 2 | | | | 194.81 | | | | | | |
| | Aqueous pigment dispersion 3 | | | | | 194.81 | 194.81 | | | | |
| Cross-linking agent | DENACOL EX313 | 2.29 | | | | 0.47 | 2.14 | 0.45 | 0.84 | 1.12 | 1.67 |
| | DENACOL EX810 | | 1.83 | | 2.00 | | | | | | |
| | DENACOL EX830 | | | 4.35 | | | | | | | |
| Ion-exchanged water | | 2.91 | 3.36 | 0.85 | 3.19 | 4.73 | 3.06 | 4.75 | 4.36 | 4.08 | 3.52 |
| Cross-linking ratio of cross-linked polymer | | 82% | 82% | 82% | 82% | 18% | 82% | 18% | 30% | 40% | 60% |

DENACOL EX313: epoxy equivalent 141, 99% by mass of dissolution rate (water solubility) of 10 g of cross-linking agent in 90 g of ion-exchanged water (at 25°C), from Nagase ChemteX Corporation
DENACOL EX810: epoxy equivalent 113, 100% by mass of dissolution rate (water solubility) of 10 g of cross-linking agent in 90 g of ion-exchanged water (at 25°C), from Nagase ChemteX Corporation
DENACOL EX830: epoxy equivalent 268, 100% by mass of dissolution rate (water solubility) of 10 g of cross-linking agent in 90 g of ion-exchanged water (at 25°C), from Nagase ChemteX Corporation

(Preparation Example 1)

In a plastic container, ion-exchanged water, propylene glycol, glycerol, triethanolamine, TEGO Wet 280 (from Evonik Industries AG, silicone surfactant), ACTICIDE B20 (from Thor Japan, preservative), and ethylene urea were charged in parts by mass as listed in Table 3, and after ethylene urea was dissolved, propylene glycol and SURFYNOL 420 (from Evonik Industries AG, acetylene surfactant) were additionally charged and the mixture was stirred to obtain a mixture A. Subsequently, AUROREN (registered trademark) AE-301 (Nippon Paper Industries Co., Ltd., acid-modified polypropylene), ion-exchanged water, AQUACER 515 (BYK-Chemie GmbH, high-density oxidized polyethylene wax emulsion), and ion-exchanged water were blended in this order to obtain a mixture B. An ink 1 was obtained by blending the cross-linked dispersion 1 obtained in Example 1 in parts by mass as listed in Table 3 with the mixture B, then blending the mixture A, and stirring the mixture after washing the container with ion-exchanged water.

(Preparation Examples 2 to 10)

Inks 2 to 10 were obtained by preparation under the same conditions, except that the cross-linked dispersion 1 in Preparation Example 1 was changed to cross-linked dispersions 2 to 10.

<Characteristics Evaluation>

The ink characteristics were evaluated by the methods below.

[Storage Stability Evaluation]

For the inks 1 to 10 immediately after production, the volume average particle size D0 was measured by the following particle size measurement method.
Next, 30 mL of each of the inks 1 to 10 was filled into a polypropylene bottle with a volume of 30 mL and stored in a thermostatic chamber at 60°C. After a certain period of time from the start of storage, the volume average particle size D1 of each ink after storage was measured by the following particle size measurement method.
Based on the volume average particle sizes D0 and D1 and the following formula, the rate of change in particle size of each ink after a certain period of time from the start of storage was calculated, and the storage stability of the inks 1 to 10 was evaluated based on the rate of change.

$$\text{Rate of change in particle size} = [(D1 - D0)/(D0)] \times 100$$

The storage stability of the inks 1 to 10 was considered as being excellent if the rate of change in volume average particle size was less than 10% in 2 weeks, less than 15% in 4 weeks, and less than 20% in 8 weeks of testing.

[Heating and Cooling Cycle]

The volume average particle sizes D0 of the inks 1 to 10 immediately after production were measured by the following particle size measurement method.
Next, 30 mL of inkjet ink was filled into a polypropylene plastic bottle with a volume of 30 mL and allowed to stand in a thermostatic chamber under room temperature conditions. The chamber temperature was cooled to -40°C, held at -40°C for 4 hours, then increased to 70°C and held at 70°C for 4 hours. This temperature cycle was repeated four times, the volume average particle size D2 of each ink after completion of the cycles was measured by the following method, and the rate of change from D0 was calculated.

$$\text{Rate of change in particle size} = [(D2 - D0)/(D0)] \times 100$$

The heating and cooling cycles of the inks 1 to 10 were considered as being excellent if the rate of change in volume average particle size was less than 10%.
The particle sizes of the inks 1 to 10 in the above storage stability and heating and cooling cycle evaluation were MV (volume average diameter) values measured under the following conditions.

Measuring device: Particle size analyzer NANOTRAC WAVE 2 (MicrotracBEL Corp.)
Measuring temperature: 25°C
Number of times of measurement: 1
Measurement time: 180 seconds
Particle transmissivity: transmit
Particle refractive index: 1.51
Particle shape: Non-spherical
Density: 1.00
Solvent refractive index: 1.333
Filter: Stand: Norm

[Printability Test]

Ink 50 mL was filtered through a 0.45-pm membrane filter and filled into a black ink cartridge of a Hewlett-Packard printer ENVY4500. Grayscale printing: black ink only and print quality: draft were set in the print properties, and solid printing was done on printing paper HAMMER MILL from Sylvamo Corporation. Color saturation was obtained by measuring the printed area with a colorimeter eXact from X-Rite. The obtained saturation value of 45 or higher was determined as good printability.

The evaluation results are summarized in Table 3.

[Table 3]

| | | Preparation Ex. 1 | Preparation Ex. 2 | Preparation Ex. 3 | Preparation Ex. 4 | Preparation Ex. 5 | Preparation Ex. 6 | Preparation Ex. 7 | Preparation Ex. 8 | Preparation Ex. 9 | Preparation Ex. 10 |
|---|---|---|---|---|---|---|---|---|---|---|---|
| | | Ink 1 | Ink 2 | Ink 3 | Ink 4 | Ink 5 | Ink 6 | Ink 7 | Ink 8 | Ink 9 | Ink 10 |
| Dispersion | Cross-linked dispersion 1 | 120.00 | | | | | | | | | |
| | Cross-linked dispersion 2 | | 120.00 | | | | | | | | |
| | Cross-linked dispersion 3 | | | 120.00 | | | | | | | |
| | Cross-linked dispersion 4 | | | | 120.00 | | | | | | |
| | Cross-linked dispersion 5 | | | | | 120.00 | | | | | |
| | Cross-linked dispersion 6 | | | | | | 120.00 | | | | |
| | Cross-linked dispersion 7 | | | | | | | 120.00 | | | |
| | Cross-linked dispersion 8 | | | | | | | | 120.00 | | |
| | Cross-linked dispersion 9 | | | | | | | | | 120.00 | |
| | Cross-linked dispersion 10 | | | | | | | | | | 120.00 |
| Mixture A | Ion-exchanged water | 6.00 | 6.00 | 6.00 | 6.00 | 6.00 | 6.00 | 6.00 | 6.00 | 6.00 | 6.00 |
| | Propylene glycol | 16.32 | 16.32 | 16.32 | 16.32 | 16.32 | 16.32 | 16.32 | 16.32 | 16.32 | 16.32 |
| | Glycerol | 36.00 | 36.00 | 36.00 | 36.00 | 36.00 | 36.00 | 36.00 | 36.00 | 36.00 | 36.00 |
| | Triethanolamine | 0.60 | 0.60 | 0.60 | 0.60 | 0.60 | 0.60 | 0.60 | 0.60 | 0.60 | 0.60 |
| | Tego WET 280 | 0.30 | 0.30 | 0.30 | 0.30 | 0.30 | 0.30 | 0.30 | 0.30 | 0.30 | 0.30 |
| | ACTICIDE B20 | 0.30 | 0.30 | 0.30 | 0.30 | 0.30 | 0.30 | 0.30 | 0.30 | 0.30 | 0.30 |
| | Ethylene urea | 16.87 | 16.87 | 16.87 | 16.87 | 16.87 | 16.87 | 16.87 | 16.87 | 16.87 | 16.87 |
| | Propylene glycol | 7.20 | 7.20 | 7.20 | 7.20 | 7.20 | 7.20 | 7.20 | 7.20 | 7.20 | 7.20 |
| | SURFYNOL 420 | 3.30 | 3.30 | 3.30 | 3.30 | 3.30 | 3.30 | 3.30 | 3.30 | 3.30 | 3.30 |
| Mixture B | AUROREN AE-301 | 30.00 | 30.00 | 30.00 | 30.00 | 30.00 | 30.00 | 30.00 | 30.00 | 30.00 | 30.00 |
| | Ion-exchanged water | 15.00 | 15.00 | 15.00 | 15.00 | 15.00 | 15.00 | 15.00 | 15.00 | 15.00 | 15.00 |
| | AQUACER 515 | 8.57 | 8.57 | 8.57 | 8.57 | 8.57 | 8.57 | 8.57 | 8.57 | 8.57 | 8.57 |
| | Ion-exchanged water | 15.00 | 15.00 | 15.00 | 15.00 | 15.00 | 15.00 | 15.00 | 15.00 | 15.00 | 15.00 |
| Washing water | Ion-exchanged water | 24.54 | 24.54 | 24.54 | 24.54 | 24.54 | 24.54 | 24.54 | 24.54 | 24.54 | 24.54 |

| Characteristics evaluation | Storage stability (2 weeks) | 4% | 4% | 8% | 10% | 323% | 1% | 316% | 32% | 16% | 1% |
|---|---|---|---|---|---|---|---|---|---|---|---|
| | Storage stability (4 weeks) | 0% | 7% | 10% | 14% | 193% | 3% | 261% | 51% | 15% | 3% |
| | Storage stability (8 weeks) | 5% | 9% | 13% | 19% | 228% | 27% | 253% | 107% | 24% | 5% |
| | Heating and cooling cycle | -6% | -3% | 9% | 6% | 284% | -2% | 107% | 12% | 8% | 4% |
| | Printability (color saturation) | 48 | 47 | 50 | 54 | 39 | 42 | 46 | 42 | 47 | 43 |

As shown in Table 3, the inks 1 to 4, which are inks using the aqueous pigment dispersion of the present invention, exhibited not only good storage stability but also good heating and cooling cycle evaluation results. In addition, the printability was also good.

On the other hand, the inks 5 and 7 to 9, which use aqueous pigment dispersions with a low cross-linking ratio of cross-linked polymer, exhibited poor storage stability as well as poor heating and cooling cycle evaluation results. The aqueous pigment dispersions 5 and 6, which use dispersion resins with a low acid value, had poor printability, and the resulting printed materials had low color saturation.

(Production Example 4)

The dispersion resin B and black pigment 995B (from Mitsubishi Chemical Corporation) were charged in a planetary mixer (product name: Chemical Mixer ACM04LVTJ-B from AIKOSHA MFG., CO., LTD.) with a jacket heated to 80°C, according to the amounts in Table 4, and stirred at a rotation speed of 80 rpm and a revolution speed of 25 rpm. After 10 minutes, triethylene glycol was added as a solvent and 34% by mass of potassium hydroxide solution as a neutralizer, and the mixture was stirred again. Kneading was continued until 60 minutes had passed after the current value of the planetary mixer showed its maximum current value to obtain a kneaded product.

The resulting kneaded product was gradually mixed with ion-exchanged water and diluted. Finally, triethylene glycol was added as a diluent to obtain an aqueous pigment dispersion 4 with a pigment concentration of 13.0% by mass.

(Production Example 5)

An aqueous pigment dispersion 5 was obtained in the same manner as in Production Example 4, except that among the raw materials used, the pigment was changed to cyan pigment SBG-SD (from DIC Corporation), and the input amounts of other raw materials were changed as listed in Table 4.

[Table 4]

| | | Production Example 4 | Production Example 5 |
|---|---|---|---|
| | | Aqueous pigment dispersion 4 | Aqueous pigment dispersion 5 |
| Pigment | 995B | 50 | |
| | SBG-SD | | 50 |
| Dispersio n resin | Dispersion polymer B | 20 | 15 |
| Solvent | Triethylene glycol | 42.00 | 21.00 |
| Neutraliz er | 34% by mass potassium hydroxide solution | 11.88 | 8.91 |
| Diluent | Ion-exchanged water | 247.74 | 270.71 |
| | Triethylene glycol | 13.00 | 19.00 |

(Example 5)

In a polyethylene container with a lid, the aqueous pigment dispersion 4 obtained in Production Example 4, a cross-linking agent, and ion-exchanged water were charged in parts by mass as listed in Table 5, and stirred at 70°C for 5 hours. After stirring, the mixture was cooled to obtain a cross-linked dispersion 11 with a pigment concentration of 12.5% by mass. The cross-linking ratio of the cross-linked polymer in this cross-linked dispersion was 82%.

(Example 6)

A cross-linked dispersion 12 was obtained in the same manner as in Example 5, except that the raw materials used and their input amounts were changed as listed in Table 5.

[Table 5]

| | | Example 5 | Example 6 |
|---|---|---|---|
| | | Cross-linked dispersion 11 | Cross-linked dispersion 12 |
| Dispersion | Aqueous pigment dispersion 4 | 192.31 | |
| | Aqueous pigment dispersion 5 | | 192.31 |
| Cross-linking agent | DENACOL EX810 | 3.34 | 2.50 |
| Ion-exchanged water | | 4.35 | 5.19 |
| Cross-linking ratio of cross-linked polymer | | 82% | 82% |

(Preparation Example 11)

In a plastic container, ion-exchanged water, propylene glycol, glycerol, triethanolamine, TEGO Wet 280 (from Evonik Industries AG, silicone surfactant), ACTICIDE B20 (from Thor Japan, preservative), and ethylene urea were charged in parts by mass as listed in Table 6, and after ethylene urea was dissolved, propylene glycol and SURFYNOL 420 (from Evonik Industries AG, acetylene surfactant) were additionally charged and the mixture was stirred to obtain a mixture A. Subsequently, AUROREN (registered trademark) AE-301 (Nippon Paper Industries Co., Ltd., acid-modified polypropylene), ion-exchanged water, AQUACER 515 (BYK-Chemie GmbH, high-density oxidized polyethylene wax emulsion), and ion-exchanged water were blended in this order to obtain a mixture B. An ink 11 was obtained by blending the cross-linked dispersion 11 obtained in Example 5 in parts by mass as listed in Table 6 with the mixture B, then blending the mixture A, and stirring the mixture after washing the container with ion-exchanged water.

(Preparation Example 12)

An ink 12 was obtained by preparation under the same conditions, except that the cross-linked dispersion 11 in Preparation Example 11 was changed to the cross-linked dispersion 12 and the parts by mass were changed as listed.

[Table 6]

| | | Preparation Example 11 | Preparation Example 12 |
|---|---|---|---|
| | | Ink 11 | Ink 12 |
| Dispersion | Cross-linked dispersion 11 | 134.40 | |
| | Cross-linked dispersion 12 | | 103.20 |

(continued)

| | | Preparation Example 11 | Preparation Example 12 |
|---|---|---|---|
| | | Ink 11 | Ink 12 |
| Mixture A | Ion-exchanged water | 6.00 | 6.00 |
| | Propylene glycol | 15.00 | 15.00 |
| | Glycerol | 36.00 | 36.00 |
| | Triethanolamine | 0.60 | 0.60 |
| | Tego WET 280 | 0.30 | 0.30 |
| | ACTICIDE B20 | 0.30 | 0.30 |
| | Ethylene urea | 16.87 | 16.87 |
| | Propylene glycol | 0.72 | 26.88 |
| | SURFYNOL 420 | 3.00 | 3.00 |
| Mixture B | AUROREN AE-301 | 30.00 | 30.00 |
| | Ion-exchanged water | 15.00 | 15.00 |
| | AQUACER 515 | 8.57 | 8.57 |
| | Ion-exchanged water | 15.00 | 15.00 |
| Washing water | Ion-exchanged water | 18.24 | 23.28 |
| Characteristic s evaluation | Storage stability (2 weeks) | -3% | 1% |
| | Storage stability (4 weeks) | -1% | 0% |
| | Storage stability (8 weeks) | -5% | -6% |
| | Heating and cooling cycle | 1% | 2% |
| | Printability (color saturation) | 2 | 42 |

[Printability Test]

Ink 50 mL was filtered through a 0.45-$\mu$m membrane filter and filled into a black ink cartridge of a Hewlett-Packard printer ENVY4500. Grayscale printing: black ink only and print quality: draft were set in the print properties, and solid printing was done on printing paper HAMMER MILL from Sylvamo Corporation. Color saturation was obtained by measuring the printed area with a colorimeter eXact from X-Rite. The ink using black pigment was determined to have good printability if the saturation value was 5 or less. On the other hand, the ink using cyan pigment was determined to have good printability if the saturation value was 40 or more.

As listed in Table 6, even when black and cyan pigments were used, good storage stability and heating and cooling cycle evaluation results were obtained in the same manner as with magenta pigment. In addition, the printability was also good.

**Claims**

1.  An aqueous pigment dispersion comprising:

    water;
    a pigment; and
    a cross-linked polymer, wherein
    the cross-linked polymer is a reaction product of a dispersion resin having an anionic group and a cross-linking agent,
    the dispersion resin having an anionic group is water soluble and has an acid value of 181 to 220 mgKOH/g,
    the cross-linking agent is a water-soluble compound having two or more epoxy groups, and
    the cross-linked polymer has a cross-linking ratio of more than 80%.

2. The aqueous pigment dispersion according to claim 1, wherein a ratio of the dispersion resin having an anionic group to the pigment, the dispersion resin having an anionic group/the pigment, is 0.10 to 0.40.

3. The aqueous pigment dispersion according to claim 1, wherein the pigment is a quinacridone pigment.

4. An inkjet ink comprising the aqueous pigment dispersion according to any one of claims 1 to 3.

5. A printed material comprising the inkjet ink according to claim 4 and a recording medium.

## INTERNATIONAL SEARCH REPORT

| International application No. |
| --- |
| **PCT/JP2024/018929** |

**A. CLASSIFICATION OF SUBJECT MATTER**

*C09D 11/326*(2014.01)i; *B41J 2/01*(2006.01)i; *B41M 5/00*(2006.01)i; *C09B 48/00*(2006.01)i; *C09D 17/00*(2006.01)i
FI:   C09D11/326; B41J2/01 501; B41M5/00 120; C09B48/00 Z; C09D17/00

According to International Patent Classification (IPC) or to both national classification and IPC

**B. FIELDS SEARCHED**

Minimum documentation searched (classification system followed by classification symbols)

C09D11/326; B41J2/01; B41M5/00; C09B48/00; C09D17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2022-70106 A (KAO CORPORATION) 12 May 2022 (2022-05-12)<br>claims 1, 4-7, paragraphs [0012], [0015], [0036], [0046] | 1-5 |
| X | JP 2022-70102 A (KAO CORPORATION) 12 May 2022 (2022-05-12)<br>claims 1-2, 8, paragraphs [0013], [0018], [0036], [0038] | 1-5 |
| A | JP 2009-46595 A (KAO CORPORATION) 05 March 2009 (2009-03-05)<br>claims 1-10, paragraphs [0007]-[0042], examples | 1-5 |
| A | JP 2018-109095 A (KAO CORPORATION) 12 July 2018 (2018-07-12)<br>claims 1-8, paragraphs [0007]-[0060], examples | 1-5 |
| A | WO 2019/013173 A1 (KAO CORPORATION) 17 January 2019 (2019-01-17)<br>claims 1-15, paragraphs [0009]-[0045], examples | 1-5 |
| A | WO 2003/097753 A1 (SEIKO EPSON CORPORATION) 27 November 2003 (2003-11-27)<br>claims 1-10, examples | 1-5 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **26 July 2024** | **13 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/018929**

| Patent document cited in search report | | | Publication date (day/month/year) | Patent family member(s) | | | Publication date (day/month/year) |
|---|---|---|---|---|---|---|---|
| JP | 2022-70106 | A | 12 May 2022 | (Family: none) | | | |
| JP | 2022-70102 | A | 12 May 2022 | (Family: none) | | | |
| JP | 2009-46595 | A | 05 March 2009 | US claims 1-12, examples WO EP CN | 2011/0102529 2009/025287 2182035 101778912 | A1 A1 A1 A | |
| JP | 2018-109095 | A | 12 July 2018 | (Family: none) | | | |
| WO | 2019/013173 | A1 | 17 January 2019 | US claims 1-15, examples EP CN | 2020/0123402 3653676 110892029 | A1 A1 A | |
| WO | 2003/097753 | A1 | 27 November 2003 | US claims 1-10, examples US EP | 2004/0242726 2008/0108746 1505128 | A1 A1 A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009046595 A

- WO 2018190139 A